# EUROPEAN PATENT SPECIFICATION

(11) **EP 0 433 080 B1**
(45) Date of publication and mention of the grant of the patent: **19.03.1997**
(21) Application number: 90313646.3
(22) Date of filing: 14.12.1990
(51) Int. Cl.: G01N 21/43, G01N 21/85, F02D 41/00

(54) **Apparatus for measuring the mix ratio of a composite liquid**
Vorrichtung zur Messung des Mischungsverhältnisses mehrerer Flüssigkeiten
Dispositif pour mesurer le rapport de mélange de plusieurs liquides

(30) Priority: 15.12.1989 JP 326585/89
(43) Date of publication of application: 19.06.1991
(73) Proprietor: NGK SPARK PLUG CO., LTD, Nagoya-shi (JP)
(72) Inventor: Miyata, Shigeru, Mizuho-ku, Nagoya-shi (JP); Yamada, Yoshitaka, Mizuho-ku, Nagoya-shi (JP)
(74) Representative: Senior, Alan Murray

(56) References cited:
- EP-A- 0 281 337
- EP-A- 0 292 097
- EP-A- 0 337 173
- DE-U- 8 807 364
- US-A- 4 770 129

## Description

This invention relates to a mix ratio detecting device which is capable of optically detecting the mixing ratio of a liquid consisting of two components, and particularly concerns a mix ratio detecting device suited for detecting the mix ratio of petrol and alcohol.

In an internal combustion engine, a liquid fuel consisting of petrol and alcohol has been suggested to alleviate air-pollution. In the internal combustion engine of this type, it is necessary to detect the mix ratio of petrol to alcohol so as to determine the optimum ignition timing. To cope with this requirement, a mix ratio detecting device has been introduced in which a transparent column is provided, the bottom of which is in contact with a liquid mixture of petrol and alcohol. A light-emitting diode (LED) and a photodiode are disposed either side of the column. Light from the LED passes into the column, and impinges on the interface between the column and liquid. The light which impinges at greater than the critical angle totally reflects and escapes from the column so as to fall on the photodiode which generates an output in accordance with the intensity of the light received. In this instance, the intensity of the light which the photodiode receives increases with an increase in the alcohol content of the mixture because more light from the LED is reflected by the mixture to impinge on the upper part of the photodiode. Such a device is described in EP-A-0,370,807 which was not published until after the priority date of the present application.

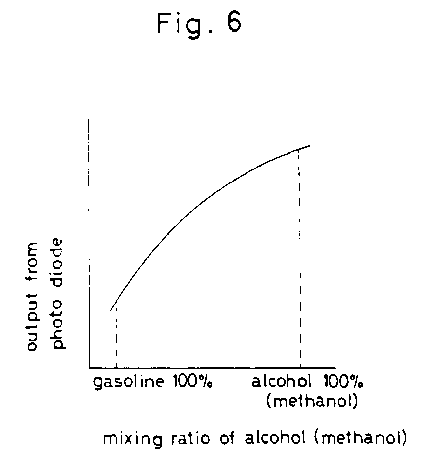

However, the increased alcohol component causes the output of the photodiode to saturate, as shown in Figure 6 which depicts a graph of mix ratio versus output from the photodiode. This is because the light from the LED diverges to the right and left, and the degree of divergence increases as the length of the optical path for the light to reach the photodiode through the column increases.

This necessitates a complicated procedure for processing the output from the photodiode to obtain a precise value for the mix ratio of petrol to alcohol, rendering it difficult to compensate for temperature variations.

According to the invention, there is provided an apparatus for measuring the mix ratio of a liquid, the apparatus comprising:
an optically permeable column placed within a cylindrical board so that the bottom of the column is in contact with the liquid, the refractive index of which is smaller than that of the column, though a hole in a holder provided in a pipe through which the liquid flows;
a light emitting diode attached to an inner surface of the board so that light emitted therefrom is incident from inside the column on the interface between the bottom of the column and the liquid, light incident on the interface at less than the critical angle being refracted into the liquid, and light incident on the interface at more than the critical angle being totally reflected therefrom within the column, the critical angle depending on the mix ratio of the liquid;
a photodiode provided on the inner surface of said cylindrical board to receive light reflected from the interface and for generating an output in accordance with the intensity of the light received, the effective photo-receiving area of the photodiode being shaped such that its width increases progressively away from the lower portion thereof, and
a voltage stabilising circuit comprising:
   an operational amplifier having an input terminal grounded through a battery, the light emitting diode being connected in series with a compensation diode between an input terminal and an output terminal of the operational amplifier;
   an electrical resistor connected between the compensation diode and the ground; and
   a capacitor connected between the input terminal and the output terminal of the operational amplifier in order to prevent a hunting action;
whereby the compensation diode continuously receives a certain proportion of the light from the light emitting diode directly through the column, and a reduction in the current flowing in the compensation photodiode causing an increase in the current across the light emitting diode so that the amount of the light beams from the light emitting diode is substantially maintained constant irrespective of variations in the ambient temperature.

With the invention, output characteristics of the photodiode are compensated by shaping the light receiving area of the photodiode to progressively increase its width dimension as it is more remote from the interface between the column and the mixing liquid. This arrangement makes it possible to provide a linear relationship between the mix ratio of the liquid and the output from the photodiode so as to easily compensate the output characteristics from a photodiode, and secure a precise mixing ratio with a simple construction.

The present invention will be further understood by reference to the following description of exemplary embodiments thereof and the accompanying drawings, in which:-
Figure 1 is a plan view of a compensation photodiode according to the invention;
Figure 1a is a plan view of a photodiode according to the invention;
Figure 1b is a plan view of a photodiode according to a modified form of the invention;
Figure 2 is a longitudinal cross-sectional view of a mixing ratio detecting device according to the invention;
Figure 2a is a voltage stabilising circuit incorporated to the mixing ratio detecting device according to the invention;
Figure 3 is a schematic graph showing diverging characteristics of the photodiode;
Figure 4 is an output characteristic showing a relationship between an output and a mixing ratio of petrol and alcohol;
Figure 5 is a characteristic graph showing how to carry out a temperature compensation; and
Figure 6 is a graph showing a relationship with abscissa and ordinate as a mixing ratio and an output from the photodiode respectively.

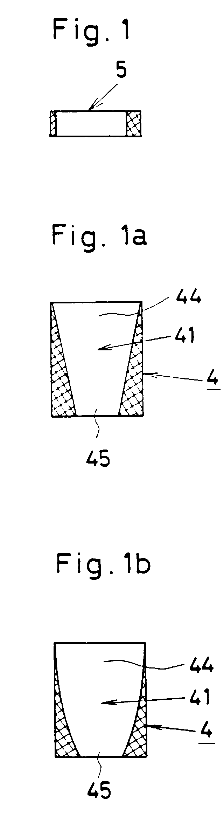

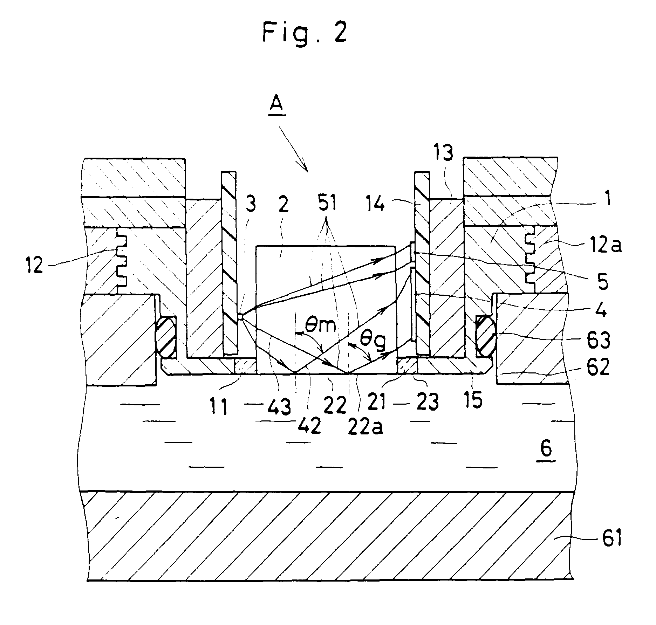

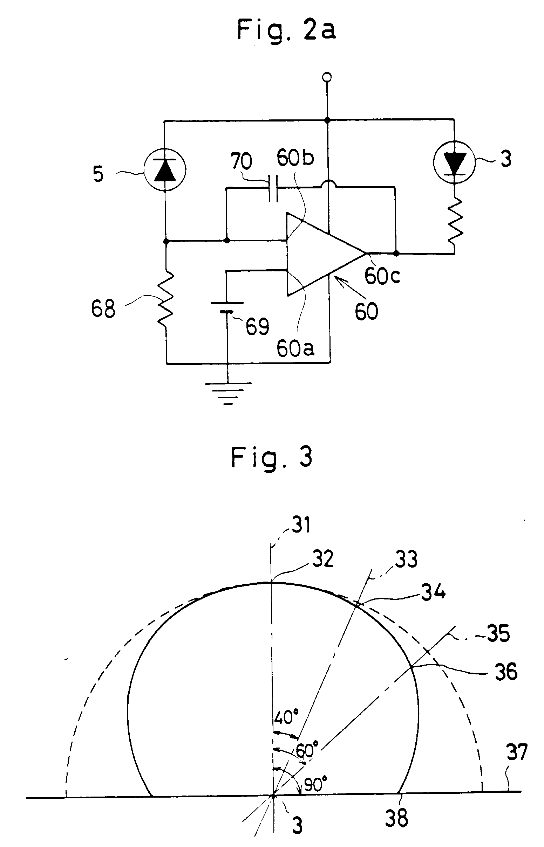

Referring to Figures 1 to 5, in which an embodiment of the invention is shown, a compensation photodiode 5 and a photodiode 4, shown in Figures 1 and 1a respectively, re incorporated into a mix ratio detecting device (A). As shown in Figure 2, the device (A) has a cylindrical holder 1 which is, by way of an O-ring 63, liquid-tightly fit into an aperture 62 in a metallic pipe 61 through which the liquid mixture 6 flows. The liquid mixture 6 is a mixture of petrol and alcohol (methanol) which is to serve as a liquid fuel for an internal combustion engine. The holder 1 has serrations 12 on its outer surface so as to tightly fit into a support ring 12a which is fixed on the pipe 61. A cylindrical board 14 is fitted inside a resin cylinder 13 which is turn fits inside the holder 1. Within the resin cylinder 13, an optically permeable column 2 is placed. The latter is made of a flint glass, whose refractive index (1.58) is greater than that of the liquid mixture 6 which varies continuously in the range of from 1.33 to 1.43. The bottom 22 of the optically permeable column 2 is liquid-tightly fitted with a vitrified ring 21 in a circular hole in the holder 1 so that the column 2 is in contact with the liquid mixture 6 at an interface 22a. In this instance, the bottom 15 of the holder 1 and the bottom 23 of the vitrified ring 21 are flush with the bottom 22 of the column 2.

A light emitting diode (LED) 3 and a photodiode 4 are attached to the inner surface of the cylindrical board 14, one either side of the column 2. The effective photo-receiving area 41 of the photodiode 4 is in the form of an inverted trapezoid, having an upper portion 44 and a lower portion 45, by partly masking the photodiode 4 as shown in Figure 1a. This means that the photo-receiving area 41 is shaped so that its width increases progressively away from the interface 22a so as to compensate for the increasing divergence of the light output from the LED 3. The photodiode 4 may alternatively be partly masked in the form of a conic section, as shown in Figure 1b.

A compensation photodiode 5 is attached to the inner surface of the cylindrical board 14 above the photodiode 4. The compensation photodiode 5 is arranged so as to receive continuously a certain proportion of the light 51 from the LED 3 directly through the column 2, and is incorporated into a voltage stabilising circuit shown in Figure 2a.

In the voltage stabilising circuit in Figure 2a, an operational amplifier 60 has an input terminal 60a which is grounded through a battery 69. The LED 3 is connected in series with the compensation photodiode 5 between another input terminal 60b and an output terminal 60c of the operational amplifier 60. An electrical resistor 68 is connected between the compensation photodiode 5 and ground. A capacitor 70 is connected between the input terminal 60b and the output terminal 60c of the operational amplifier 60 in order to prevent hunting.

In the situation in which the device (A) is placed, the LED 3 and the photodiode 4 are subject to variations in their characteristics, depending on the ambient temperature or their age in particular. Variations in the ambient temperature affect the output from the LED 3.

The variation in the ambient temperature affects the intensity of light which the photodiode 5 receives using variations in the output therefrom. A decrease in the current flowing through the compensation photodiode 5 reduces the current flowing through the electrical resistor 68. The reduction in the current flowing through the compensation photodiode 5 is compensated for by an increase in the current across the LED 3, so that the amount of light emitted from the LED 3 is maintained substantially constant, irrespective of variations in the ambient temperature.

In operation, the light from the LED 3 is incident on one side of the column 2 and passes into it so as to be incident on the interface 22a between the bottom 22 of the column 2 and the liquid mixture 6. The light incident on the interface at less than the critical angle is refracted into the liquid mixture 6, while the light incident on the interface at more than the critical angle is totally reflected off the interface within the column 2, and escapes from the other side of the column 2. The critical angle changes, dependent on the mix of the liquid mixture 6.

If the intensity of the light 31 emitted by LED 3 in a direction perpendicular to the photodiode 4 is 100% as designated at 32, the intensity of the light 33 emitted in a direction 40° from the normal is only 95% as indicated at 34. Figure 3 shows the intensity of the light emitted by the LED 3 depending on the angles of emission relative to the normal to the photodiode 4. The attenuation of the light emitted by the LED 3 tends to increase with an increase in the length of the optical path which the light travels within the column 2. The intensity of the light 35 emitted at 60° to the normal decreases to 80%, as indicated at 36, while the intensity of the light 37 emitted at 90° to the normal drops to 60%, as indicated at 38.

When the petrol component of the liquid mixture 6 is 100%, total reflection from the interface 22a occurs at angles of greater than the critical angle Θg. In this case, the light from the LED 3 has an angular divergence equivalent to the case in which the light 33 is emitted at about 40° to the normal and thus the intensity decreases to about 95%, as indicated at 34 in Figure 3.

When the alcohol component of the liquid mixture 6 is 100%, total reflection from the interface 22a occurs at angles of more than the critical angle Θm. In this case, the light from the LED 3 has an angular divergence equivalent to the case in which the light 35 is emitted at about 60° to the normal and thus the intensity decreases to about 80%, as indicated at 36 in Figure 3.

Also, the optical path 42 of the light reflected at the critical angle Θm is longer than the optical path 43 of the light reflected at the critical angle Θg, so that the degree of divergence of the light from the LED 3 increases in the former case, as seen in Figure 2.

The effective photo-receiving area 41 os the photodiode 4 is designed in the form of the inverted trapezoid which has an upper area portion 44 and a lower area portion 45. The upper area portion 44 is enlarged to compensate for the decrease in the intensity of the light beams received due to the divergence of the light beams from the LED 3.

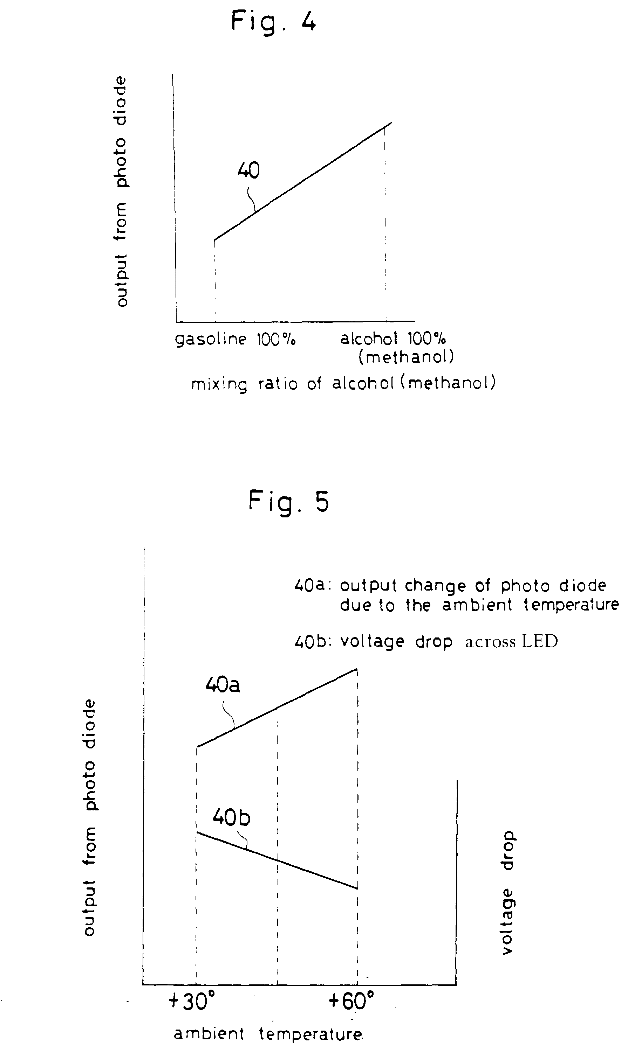

The output characteristics 40 of the photodiode 4 are shown in Figure 4. The output from the photodiode 4 varies linearly with the mix ratio of alcohol of a constant temperature.

The refractive index of the liquid mixture 6 changes with an increase in the ambient temperature at the rate of about -4 x 10⁻⁴/°C. As a result, the intensity of the light beams which the photodiode 4 receives increases with an increase in the ambient temperature so that the output from the photodiode also increases. The change in output of the photodiode 4 is linear with the change in the ambient temperature, as shown at 40a in Figure 5. The output from the photodiode 4 is transmitted to a central processing unit (not shown) so as to control the timing of the ignition of the internal combustion engine.

In the situation in which the device (A) is placed, the output of the LED 3 varies according to the ambient temperature. Increases in the ambient temperature cause decreases in the electrical resistance of the LED 3 so that the voltage across the LED 3 decreases, as shown at 40b in Figure 5. The voltage drop across the LED 3 change in the ambient temperature compensates, to some degree, for the change in output from the photodiode 4.

It is noted that the optimum shape of the photodiode is easily determined when the angle of incidence of light on the photodiode continuously changes with the change of angle of reflection from the interface.

The optically permeable column many be circular, rectangular or polygonal in section.

Further, the change in the refractive index of petrol according to the ambient temperature is slightly different from that of alcohol, more precisely, the former is greater than the latter. In this case the shape of the photodiode may be chosen so that the output characteristics 40 in Figure 4 curves somewhat downward in order to compensate more precisely.

## Claims

1. An apparatus for measuring the mix ratio of a liquid, the apparatus comprising:
an optically permeable column (2) placed within a cylindrical board (14) so that the bottom (22) of the column is in contact with the liquid (6), the refractive index of which is smaller than that of said column (2); said contact is made though a hole in a holder (1) provided in a pipe (61) through which the liquid (6) flows;
a light emitting diode (3) attached to an inner surface of the board (14) so that light emitted therefrom is incident from inside the column on the interface (22a) between the bottom of the column (2) and the liquid (6), light incident on the interface at an angle less than the critical angle being refracted into the liquid, and light incident on the interface at more than the critical angle being totally reflected therefrom within the column, the critical angle depending on the mix ratio of the liquid (6);
a photodiode (4) provided on the inner surface of said cylindrical board (14) to receive light reflected from the interface and for generating an output in accordance with the intensity of the light received, the effective photo-receiving area (41) of the photodiode being shaped such that its width increases progressively away from the lower portion thereof, and
a voltage stabilising circuit comprising:
an operational amplifier (60) having an input terminal (60a) grounded through a battery (69), the light emitting diode (3) being connected in series with a compensation photodiode (5) between an input terminal (60b) and an output terminal (60c) of the operational amplifier (60);
an electrical resistor (68) connected between the compensation photodiode (5) and the ground; and
a capacitor (70) connected between the input terminal (60b) and the output terminal (60c) of the operational amplifier (60) in order to prevent a hunting action;
whereby the compensation photodiode (5) continuously receives a certain proportion of the light from the light emitting diode (3) directly through the column (2), and a reduction in the current flowing in the compensation photodiode (5) causing an increase in the current across the light emitting diode (3) so that the amount of the light beams from the light emitting diode (3) is substantially maintained constant irrespective of variations in the ambient temperature.

2. An apparatus according to claim 1, wherein the effective photo-receiving area (41) of the photodiode is in the form of an inverted trapezoid.

3. An apparatus according to claim 1, wherein the effective photo-receiving area (41) of the photodiode is in the form of a conic section.

4. An apparatus according to claim 1, 2 or 3, wherein the liquid is a mixture of petrol and alcohol.

## Patentansprüche

1. Vorrichtung zum Messen des Mischungsverhältnisses einer Flüssigkeit, wobei die Vorrichtung enthält:
eine lichtdurchlässige Säule (2), die so in einer zylindrischen Platte (14) angeordnet ist, daß das untere Ende (22) der Säule mit der Flüssigkeit (6) in Kontakt steht, deren Brechungsindex geringer ist, als der der Säule (2); dieser Kontakt wird durch eine Bohrung in einer Halterung (1) hergestellt, die sich in einem Rohr (61) befindet, durch das die Flüssigkeit (6) fließt;
eine Leuchtdiode (3), die an der inneren Oberfläche der Platte (14) so befestigt ist, daß von dort ausgehendes Licht vom Inneren der Säule auf die Grenzfläche (22a) zwischen dem unteren Ende der Säule (2) und der Flüssigkeit (6) fällt, wobei Licht, das auf die Grenzfläche unter einem Winkel kleiner als dem Grenzwinkel fällt, in die Flüssigkeit gebrochen wird, und Licht, das auf die Grenzfläche unter einem Winkel größer als dem Grenzwinkel fällt, innerhalb der Säule total reflektiert wird, wobei der Grenzwinkel vom Mischungsverhältnis der Flüssigkeit (6) abhängt;
eine Photodiode (4), die auf der inneren Oberfläche der zylindrischen Platte (14) vorgesehen ist, um von der Grenzfläche reflektiertes Licht zu empfangen und ein Ausgangssignal gemäß der Intensität des empfangenen Lichts zu erzeugen, wobei der wirksame Photorezeptorbereich (41) so geformt ist, daß sich seine Breite von unten nach oben zunehmend vergrößert, und
eine Spannungsstabilisierungsschaltung, die enthält:
einen Operationsverstärker (60), der einen Eingangsanschluß (60a) hat, der durch eine Batterie (69) geerdet wird, wobei die Leuchtdiode (3) mit einer Ausgleichsphotodiode (5) zwischen einem Eingangsanschluß (60b) und einem Ausgangsanschluß (60c) des Operationsverstärkers (60) in Reihe geschaltet ist;
einen elektrischen Widerstand (68), der zwischen die Ausgleichsphotodiode und die Erde geschaltet ist; und
einen Kondensator (70), der zwischen den Eingangsanschluß (60b) und den Ausgangsanschluß (60c) des Operationsverstärkers (60) geschaltet ist, um ein Oszillieren zu verhindern;
wobei die Ausgleichsphotodiode (5) kontinuierlich einen bestimmten Teil des Lichts der Leuchtdiode (3) direkt durch die Säule (2) empfängt, und eine Verringerung des in der Ausgleichsphotodiode (5) fließenden Stroms einen Anstieg des Stroms durch die Leuchtdiode (3) verursacht, so daß die Lichtmenge des Lichtbündels von der Leuchtdiode, unabhängig von Änderungen der Umgebungstemperatur, im wesentlichen konstant bleibt.

2. Vorrichtung nach Anspruch 1, bei der der wirksame Photorezeptorbereich (41) der Photodiode die Form eines umgekehrten Trapezes hat.

3. Vorrichtung nach Anspruch 1, bei der der wirksame Photorezeptorbereich (41) der Photodiode die Form eines Kegelabschnitts hat.

4. Vorrichtung nach den Ansprüchen 1, 2 oder 3, bei der die Flüssigkeit eine Mischung aus Benzin und Alkohol ist.

## Revendications

1. Dispositif pour mesurer le rapport de mélange d'un liquide, le dispositif comprenant :
une colonne (2) optiquement perméable, placée dans un caisson cylindrique (14) de façon que le bas (22) de la colonne soit au contact du liquide (6) dont l'indice de réfraction est inférieur à celui de ladite colonne (2); ledit contact est établi par l'intermédiaire d'un trou dans un support (1) placé dans un tuyau (61) dans lequel circule le liquide (6) ;
une diode photo-émettrice(3) fixée à une surface intérieure du caisson (14) de façon que la lumière émise depuis celle-ci vient frapper, depuis l'intérieur de la colonne, l'interface (22a) entre le bas de la colonne (2) et le liquide (6), la lumière frappant l'interface suivant un angle inférieur à l'angle critique étant réfractée vers le liquide, et la lumière frappant l'interface suivant un angle supérieur à l'angle critique étant totalement réfléchie depuis celle-ci dans la colonne, l'angle critique dépendant du rapport de mélange du liquide (6);
une photodiode (4) disposée sur la surface intérieure dudit caisson cylindrique (14) pour recevoir la lumière réfléchie depuis l'interface et pour produire un signal de sortie en fonction de l'intensité de la lumière reçue, la surface photoréceptrice effective (41) de la photodiode ayant une forme telle que sa largeur augmente progressivement à mesure que la distance par rapport à sa partie inférieure augmente, et
un circuit de stabilisation de tension comprenant :
un amplificateur opérationnel (60) ayant une borne (60a) d'entrée reliée à la terre par une batterie (69), la diode photo-émettrice (3) étant montée en série avec une photodiode de compensation (5) entre une borne (60b) d'entrée et une borne (60c) de sortie de l'amplificateur opérationnel (60) ;
une résistance électrique (58) montée entre la photodiode de compensation (5) et la terre ; et
un condensateur (70) monté entre la borne (60b) d'entrée et la borne (60c) de sortie de l'amplificateur opérationnel (60) afin d'empêcher une action d'oscillation;
grâce à quoi la photodiode de compensation (5) reçoit de façon continue, directement à travers la colonne, une certaine proportion de la lumière émise par la diode photo-émettrice (3), et une diminution du courant passant dans la photodiode de compensation (5) provoquant une augmentation du courant dans la diode photo-émettrice (3) de façon que la quantité de faisceaux lumineux émis par la diode photo-émettrice (3) soit maintenue sensiblement constante indépendamment des variations de la température ambiante.

2. Dispositif selon la revendication 1, dans lequel la surface photoréceptrice effective (41) de la photodiode a la forme d'un trapézoïde inversé.

3. Dispositif selon la revendication 1, dans lequel la surface photoréceptrice effective (41) de la photodiode a la forme d'une section conique.

4. Dispositif selon la revendication 1, 2 ou 3, dans lequel le liquide est un mélange d'essence et d'alcool.
